Europäisches Patentamt

European Patent Office

Office européen des brevets

(11) Veröffentlichungsnummer : **0 001 072**
**B1**

(12) **EUROPÄISCHE PATENTSCHRIFT**

(45) Veröffentlichungstag der Patentschrift :
**11.02.81**

(51) Int. Cl.³ : **B 29 H 1/06, F 26 B 13/28**

(21) Anmeldenummer : **78100728.1**

(22) Anmeldetag : **23.08.78**

(54) **Verfahren zum mechanischen Flüssigkeitsentzug aus Flächengebilden, die aus Polymeren bestehen.**

(30) Priorität : **03.09.77 DE 2739850**

(43) Veröffentlichungstag der Anmeldung :
**21.03.79 (Patentblatt 79/06)**

(45) Bekanntmachung des Hinweises auf die Patenterteilung : **11.02.81 Patentblatt 81/06**

(84) Benannte Vertragsstaaten :
**BE DE FR GB NL**

(56) Entgegenhaltungen :
**DE - A - 2 011 841**
**DE - B - 1 252 408**
**US - A - 1 440 371**
**US - A - 2 501 875**
**US - A - 3 364 103**
**US - A - 3 607 626**

(73) Patentinhaber : **BAYER AG**
**Zentralbereich Patente, Marken und Lizenzen**
**D-5090 Leverkusen 1, Bayerwerk (DE)**

(72) Erfinder : **Belli Creixell, Francisco, Dipl.-Ing.**
**c/o Mobay Chemical Corporation**
**New Martinsville W.Va 26155 (US)**
Erfinder : **Simon, Dieter, Dipl.-Ing.**
**Katharinental 27**
**D-5060 Bergisch-Gladbach (DE)**
Erfinder : **Ehrig, Bodo, Dr.**
**Pommernallee 5**
**D-4047 Dormagen (DE)**

0 001 072

## Verfahren zum mechanischen Flüssigkeitsentzug aus Flächengebilden, die aus Polymeren bestehen

Die vorliegende Anmeldung betrifft ein Verfahren zum mechanischen Flüssigkeitsentzug aus Flächengebilden, die aus Polymeren bestehen und in bekannter Weise durch Fällung mit Elektrolyten oder thermische oder elektrische Koagulation hergestellt werden.

Derartige Flächengebilde enthalten abhängig von ihrer Herstellungsweise noch Flüssigkeiten und die darin enthaltenen Stoffe. Durch das Herstellungsverfahren bedingt ist die Flüssigkeit im Flächengebilde dispers verteilt.

Üblicherweise werden diese Flächengebilde vor dem Flüssigkeitsentzug noch mit einer Waschflüssigkeit behandelt. Sowohl die Waschflüssigkeit wie die im Herstellungsprozeß eingesetzte Flüssigkeit werden dann im allgemeinen auf mechanischem Wege durch Ausquetschen möglichst weitgehend abgetrennt. Die nach dem mechanischen Flüssigkeitsentzug in den Flächengebilden verbleibende Restflüssigkeit wird dann auf thermischem Wege auf den gewünschten Endwert verringert. Nach bekannten Verfahren erfolgt der mechanische Flüssigkeitsentzug aus den Flächengebilden auf herkömmlichen Quetschwerken, deren Walzen mit Gummi und/oder Filz bezogen sind.

Es wurde nun gefunden, daß der mechanische Flüssigkeitsentzug aus solcher Flächengebilden in vorteilhafter Weise in einer Vorrichtung durchgeführt werden kann, die im wesentlichen aus Walzen und mitlaufendem endlosen Gewebe, vorzugsweise einem Endlosfilz besteht. Derartige Quetschvorrichtungen sind bereits aus der Papierindustrie bekannt und z.B. beschrieben in den US-PS 3 364 103 und 3 607 626. Durch ihren Einsatz bei dem erfindungsgemäßen Verfahren kann das Ausquetschen der Flächengebilde so durchgeführt werden, daß deren Struktur nicht entscheidend verändert wird.

Der Flüssigkeitsentzug aus den Flächengebilden erfolgt bei dem erfindungsgemäßen Verfahren bei geringerer mechanischer Beanspruchung. Dabei verbleibt in den Flächengebilden ein höherer Gehalt an Restflüssigkeit als bei den konventionellen Verfahren. Überraschenderweise verläuft jedoch der anschließende thermische Flüssigkeitsentzug der erfindungsgemäß mechanisch vorbehandelten Flächengebilde trotz ihres höheren Gehalts an Restflüssigkeit erheblich schneller als bei den bisherigen Verfahren. Mit Hilfe des erfindungsgemäßen Verfahrens wird daher die Gesamtzeit für den Flüssigkeitsentzug aus Flächengebilden stark reduziert.

Gegenstand der Erfindung ist somit ein Verfahren zum mechanischen Flüssigkeitsentzug aus porösen, elastischen, flüssigkeitshaltigen Flächengebilden, die aus Polymeren bestehen, durch Ausquetschen der Flüssigkeit aus den durch thermische, elektrische oder chemische Koagulationsverfahren hergestellten Flächengebilden, dadurch gekennzeichnet, daß das Ausquetschen der Flüssigkeit mittels einer oder mehrerer Walzen mit mitlaufendem endlosem Gewebe erfolgt. Bevorzugt wird als endloses Gewebe ein Endlosfilz verwendet.

Die Dicke des Endlosfilzes kann im Bereich von 0,5 bis 10 mm, bevorzugt von 1 bis 6 mm gewählt werden und beträgt im allgemeinen 2 bis 5 mm. Anstelle des Filzes kann auch ein entsprechendes Textilgewebe oder ein Kunststoffsiebgewebe verwendet werden. Die Dicke dieser Gewebe beträgt im allgemeinen 0,05 bis 5 mm, bevorzugt 0,3 bis 3 mm und besonders bevorzugt 0,5 bis 2 mm.

Der mechanische Flüssigkeitsentzug nach dem erfindungsgemäßen Verfahren wird bei Liniendrucken von 10 bis 2000 N/cm (1 bis 200 kp/cm), bevorzugt von 20 bis 800 N/cm (2 bis 80 kp/cm) und besonders bevorzugt von 50 bis 400 N/cm (5 bis 40 kp/cm) durchgeführt. Dabei beträgt die Geschwindigkeit des Flächengebildes 0,5 bis 1000 m/min, bevorzugt 1 bis 200 m/min und besonders bevorzugt 5 bis 100 m/min.

Für das erfindungsgemäße Verfahren ist besonders eine sogenannte schwimmende Walze geeignet. Derartige Walzen und entsprechende Quetschvorrichtungen sind bereits bekannt und z.B. beschrieben in Mellian Textilberichte, Band 39, Nr. 1, 1958, Seite 88 bis 90 und Band 8, Nr. 53, 1972, Seite 935 bis 940.

Durch das erfindungsgemäße Verfahren zum Flüssigkeitsentzug aus Flächengebilden wird der Feuchtigkeitsgehalt der Flächengebilde, der zunächst 55 bis 95 Gew.-% des Gesamtgewichts beträgt, auf 20 bis 50 Gew.-% reduziert. Bei den bekannten Verfahren liegt die Restfeuchtigkeit der Flächengebilde im allgemeinen bei etwa 20 bis 35 Gew.-%. Im Anschluß daran werden die Flächengebilde in bekannter Weise thermisch getrocknet, z.B. auf einem Umlufttrockner, bis zu dem gewünschten Endfeuchtigkeitsgehalt der im allgemeinen etwa 0,3 Gew.-% beträgt. Unerwarteterweise beansprucht der thermische Flüssigkeitsentzug der erfindungsgemäß entfeuchteten Flächengebilde erheblich weniger Zeit ; er verläuft bis zu 5 mal schneller als bei konventionell entfeuchteten Flächengebilden.

Das erfindungsgemäße Verfahren erlaubt daher nicht nur eine schnellere Entfeuchtung der Flächengebilde, sondern führt auch dazu, das der gesamte Trocknungsvorgang schonender und kostengünstiger durchgeführt werden kann.

Das erfindungsgemäße Verfahren kann auf alle Flächengebilde aus Polymeren angewendet werden, die porös sind, sich elastisch verhalten und durch thermische, elektrische oder chemische Koagulationsverfahren wie Gefrierkoagulation, Elektrolytfällung oder Elektrophorese hergestellt werden. Derartige Flächengebilde enthalten eine Vielzahl von Poren, die mit Flüssigkeit gefüllt sind.

Als Flächengebilde im Sinne der Erfindung werden dreidimensionale Gebilde angesehen, deren eine Dimension wesentlich kleiner ist als die anderen. Das Gebilde besteht aus beliebig geformten Polymerteilchen, die so zusammenhängen, daß sie einen porösen, elastischen Körper bilden, der durchströmbar ist bzw. durch einen vorgeschalteten Waschvorgang durchströmbar wird. Als bevorzugtes

2

Flächengebilde werden Folien angesehen. Die Dicke der Flächengebilde beträgt 0,1 bis 50 mm, bevorzugt 0,3 bis 10 mm, besonders bevorzugt 0,5 bis 5 mm.

Als besonders geeignetes Polymermaterial gelten natürliche und/oder synthetische Kautschuke. Geeignete Synthesekautschuke sind Homo- oder Copolymerisate von konjugierten Dienen mit 4 bis 8 C-Atomen und deren Chlorsubstitutionsprodukte. Beispielhaft seien die Monomeren Butadien, Isopren, Dimethylbutadien, 2-Chlorbutadien (Chloropren) und 2,3-Dichlorbutadien genannt. Ebenso geeignet sind Copolymerisate dieser Monomeren mit Vinylaromaten wie Styrol und α-Methylstyrol sowie Acrylnitril und Methacrylnitril. Ferner seien Äthylen-Propylen-Terpolymerisate und Äthylenvinylestercopolymerisate angeführt. Bevorzugt sind Folien aus Polychloropren und Butadienacrylnitrilcopolymerisaten.

Die Flächengebilde enthalten abhängig von ihren Herstellungsverfahren verschiedene Flüssigkeiten die nach dem erfindungsgemäßen Verfahren beseitigt werden können. Beispielhaft seien Wasser, Alkohole, Aceton, aromatische Kohlenwasserstoffe wie Benzol, Toluol, Xylol, aliphatische Kohlenwasserstoffe wie Pentan, Hexan, Heptan, Cyclohexan oder halogenhaltige Kohlenwasserstoffe wie z.B. Chloropren, Dichlorbuten, Chloroform, Tetrachlorkohlenstoff und chlorbenzol erwähnt.

Nach Entzug der Flüssigkeiten aus den Flächengebilden können diese, gegebenenfalls nach vorheriger Zerkleinerung zu einem Granulat, nach bekannten Verfahren weiterverarbeitet werden. Das granulat kann beispielsweise auf dem Klebstoffsektor eingesetzt werden oder bei der Herstellung von Reifen und technischen Gummiartikeln wie Kabel und Dichtungen.

Die Prozentangaben in den folgenden Beispielen sind stets Gewichtsprozente. In den Beispielen wurde stets eine durch Gefrierkoagulation hergestellte Polychloroprenfolie von 1,5 mm Dicke mit einem Anfangswassergehalt von 70 Gew.-% des Gesamtgewichts eingesetzt. Im Vergleichsbeispiel wurde die Vortrocknung auf einem konventionellen Quetschsystem vorgenommen, bestehend aus zwei mit Filz bezogenen Walzenpaaren ohne Folienunterstützung. In den erfindungsgemäßen Beispielen wurden Walzen mit mitlaufendem Endlosfilz, einem 4 mm dicken Nadelfilz, eingesetzt.

Im Vergleichsbeispiel und den erfindungsgemäßen Beispielen betrugen die Liniendrucke 100 N/cm (10 kp/cm) und die Transportgeschwindigkeit der Folie 20 m/min.

Die anschließende thermische Endtrocknung wurde immer in einem Umlufttrockner bei einer Lufttemperatur von 200 °C durchgeführt. Die Zeiten für diese Trocknung bis zu einem Endwassergehalt von 0,3 Gew.-% wurden für die erfindungsgemäßen Beispiele als relative Trocknungszeiten angegeben, bezogen auf die thermische Trocknungszeit des Vergleichsbeispiels, die gleich 1 gesetzt wurde. Die Versuchsergebnisse sind in der folgenden Tabelle zusammengestellt.

TABELLE

| beispiel | Anfangs-Wassergehalt | Restwasser-gehalt | relative thermische Trocknungszeit |
|---|---|---|---|
| Nr. | Gew.-% | Gew.-% | |
| Vergleichs-beispiel | 70,0 | 30,0 | 1 |
| 1 | 70,0 | 33,3 | 0,207 |
| 2 | — | 33,3 | 0,625 |
| 3 | — | 22,4 | 0,343 |
| 4 | — | 28,5 | 0,199 |
| 5 | — | 40,4 | 0,259 |
| 6 | — | 50,1 | 0,281 |
| 7 | — | 41,2 | 0,227 |
| 8 | — | 43,2 | 0,187 |
| 9 | — | 35,9 | 0,375 |
| 10 | — | 48,7 | 0,647 |
| 11 | — | 25,4 | 0,236 |
| 12 | — | 22,5 | 0,165 |
| 13 | — | 39,8 | 0,175 |
| 14 | — | 28,0 | 0,162 |
| 15 | — | 38,2 | 0,509 |
| 16 | — | 30,1 | 0,520 |
| 17 | — | 25,4 | 0,430 |
| 18 | — | 47,7 | 0,490 |
| 19 | — | 29,6 | 0,390 |
| 20 | — | 34,2 | 0,350 |

### Ansprüche

1. Verfahren zum mechanischen Flüssigkeitsentzug aus porösen, elastischen, flüssigkeitshaltigen Flächengebilden, die aus Polymeren bestehen, durch Ausquetschen der Flüssigkeit aus den durch thermische, elektrische oder chemische Koagulationsverfahren hergestellten Flächengebilden, dadurch gekennzeichnet, daß das Ausquetschen der Flüssigkeit mittels einer oder mehrerer Walzen mit mitlaufendem endlosem Gewebe erfolgt.

2. Verfahren nach Anspruch 1, dadurch gekennzeichnet, daß als Endlosgewebe ein Filz verwendet wird.

3. Verfahren nach Anspruch 1, dadurch gekennzeichnet, daß als Endlosgewebe ein Textilgewebe aus Wolle, Baumwolle, Synthesefasern oder deren Gemischen verwendet wird.

4. Verfahren nach Anspruch 1, dadurch gekennzeichnet, daß als Endlosgewebe ein Kunststoffsiebgewebe verwendet wird.

5. Verfahren nach Anspruch 1, dadurch gekennzeichnet, daß als Walzen « schwimmende Walzen » eingesetzt werden.

6. Verfahren nach Anspruch 1, dadurch gekennzeichnet, daß ein Liniendruck von 10 bis 2000 N/cm (1 bis 200 kp/cm) angewendet wird.

7. Verfahren nach Anspruch 1, dadurch gekennzeichnet, daß die Transportgeschwindigkeit des Flächengebildes 0,5 bis 1000 m/mim. beträgt.

8. Verfahren nach Anspruch 1, dadurch gekennzeichnet, daß zuvor das Flächengebilde durch Gefrierkoagulation hergestellt wird.

9. Verfahren nach Anspruch 1, dadurch gekennzeichnet, daß die Dicke des Flächengebildes 0,1 bis 50 mm beträgt.

10. Verfahren nach Anspruch 1, dadurch gekennzeichnet, daß das Flächengebilde aus natürlichem und/oder synthetischem Kautschuk besteht.

11. Verfahren nach Anspruch 1, dadurch gekennzeichnet, daß das Flächengebilde aus Polychloropren besteht.

### Claims

1. A process for the mechanical removal of liquid from porous, elastic, liquid-containing, sheet-form materials consisting of polymers by squeezing out the liquid from the sheet-form materials produced by thermal, electrical or chemical coagulation processes, characterised in that the liquid is squeezed out by means of one or more rolls in conjunction with a co-circulating endless fabric.

2. A process according to claim 1, characterised in that the endless fabric is a felt.

3. A process according to claim 1, characterised in that the endless fabric is a textile fabric of wool, cotton, synthetic fibres or mixtures thereof.

4. A process according to claim 1, characterised in that the endless fabric is a plastic-based screen cloth.

5. A process according to claim 1, characterised in that the rolls are " floating rolls ".

6. A process according to claim 1, characterised in that a linear pressure of from 10 to 2000 N/cm (1 to 200 kp/cm) is applied.

7. A process according to claim 1, characterised in that the rate of travel of the sheet-form material is between 0.5 and 1000 m/minute.

8. A process according to claim 1, characterised in that prior to it the sheet-form material is produced by low-temperature coagulation.

9. A process according to claim 1, characterised in that the sheet-form material has a thickness of from 0.1 to 50 mm.

10. A process according to claim 1, characterised in that the sheet-form material consists of natural and/or synthetic rubber.

11. A process according to claim 1, characterised in that the sheet-form material consists of polychloroprene.

### Revendications

1. Procédé pour l'élimination mécanique des liquides contenus dans des articles planiformes poreux, élastiques, et consistant en polymères, par essorage des liquides contenus dans les articles planiformes préparés par des techniques de coagulation thermiques, électriques ou chimiques, ce procédé se caractérisant en ce que l'essorage des liquides est effectué à l'aide d'un ou plusieurs cylindres et d'un tissu sans fin en mouvement simultané.

2. Procédé selon la revendication 1, caractérisé en ce que le tissu sans fin est un feutre.

3. Procédé selon la revendication 1, caractérisé en ce que le tissu sans fin est un tissu textile consistant en laine, coton, fibres synthétiques ou leurs mélanges.

4. Procédé selon la revendication 1, caractérisé en ce que le tissu sans fin est un tissu à mailles de résine synthétique.

5. Procédé selon la revendication 1, caractérisé en ce que les cylindres sont des cylindres « flottants ».

6. Procédé selon la revendication 1, caractérisé en ce que l'on applique une pression linéaire de 10 à 2.000 N/cm (1 à 200 kg/cm).

7. Procédé selon la revendication 1, caractérisé en ce que la vitesse de transport de l'article planiforme est de 0,5 à 1.000 m/min.

8. Procédé selon la revendication 1, caractérisé en ce que l'article planiforme a été préparé au préalable par coagulation au froid.

9. Procédé selon la revendication 1, caractérisé en ce que l'épaisseur de l'article planiforme est de 0,1 à 50 mm.

10. Procédé selon la revendication 1, caractérisé en ce que l'article planiforme consiste en caoutchouc naturel et/ou synthétique.

11. Procédé selon la revendication 1, caractérisé en ce que l'article planiforme consiste en polychloroprène.